# EUROPÄISCHE PATENTSCHRIFT

(11) **EP 0 715 887 B1**
(45) Veröffentlichungstag und Bekanntmachung des Hinweises auf die Patenterteilung: **09.08.2000**
(21) Anmeldenummer: 95119443.0
(22) Anmeldetag: 08.12.1995
(51) Int. Cl.: B01J 8/24

(54) **Partikelverwirbelungsverfahren zur Erzeugung eines homogenen Partikelstroms und Vorrichtung zu dessen Durchführung**
Process for fluidising particles in order to achieve a homogenous stream of particles and apparatus for carrying out the process
Procédé de fluidisation de particules pour obtenir un courant homogène de particules et dispositif pour mettre en oeuvre ce procédé

(30) Priorität: 08.12.1994 DE 4443773
(43) Veröffentlichungstag der Anmeldung: 12.06.1996
(73) Patentinhaber: BASF AKTIENGESELLSCHAFT, 67056 Ludwigshafen (DE)
(72) Erfinder: Biallas, Bernd, Dr., D-48167 Münster (DE); Duschek, Wolfgang, Dr., D-48165 Münster (DE); Mattmann, Wolfgang, Dr., D-67117 Limburgerhof (DE); Hilligardt, Klaus, Dr., D-67117 Limburgerhof (DE); Feindt, Hans-Jacob, Dr., D-67069 Ludwigshafen (DE)
(74) Vertreter: Isenbruck, Günter, Dr.

(56) Entgegenhaltungen:
- EP-A- 0 093 801
- EP-A- 0 112 105
- DE-A- 3 925 476
- PATENT ABSTRACTS OF JAPAN vol. 8 no. 191 (M-322) ,4.September 1984 & JP-A-59 081414 (BABCOCK HITACHI K.K.) 11.Mai 1984,
- PATENT ABSTRACTS OF JAPAN vol. 9 no. 100 (M-376) ,2.Mai 1984 & JP-A-59 225209 (KAWASAKI JUKOGYO K.K.) 18.Dezember 1984,
- PATENT ABSTRACTS OF JAPAN vol. 13 no. 431 (C-640) ,26.September 1989 & JP-A-01 168335 (SHINKO PAIROPAWAA K.K.) 3.Juli 1989,
- Werther, J. "Fluidized-Bed Reactors" in "Ullmann's Encyclopedia of Industrial Chemistry", 5. Aufl., Elvers, B., Hawkins, S., Schulz, G. (Hrsg.), VCH Weinheim, 1992, Band B4, Seiten 239-242
- Peinke, W. in "Messen, Steuern und Regeln in der Chemischen Technik", Band III, Hengstenberg, J., Sturm, B., Winkler, O. (Hrsg.), Springer-Verlag Berlin, 1981, Seiten 1-4

## Beschreibung

Die vorliegende Erfindung bezieht sich auf ein Partikelverwirbelungsverfahren und eine Vorrichtung zu dessen Durchführung. Insbesondere soll eine Wirbelschicht aus Pulverlackpartikeln erzeugt werden.

Pulverlacke gewinnen in der industriellen Anwendung zunehmend an Bedeutung. Um zufriedenstellende Lackierungsergebnisse zu erreichen, ist u.a. das Problem der gleichmäßigen Fluidisation von Pulverlacken zu lösen. Zum Auftragen von Pulverlacken wird Pulverlack durch Unterdruck aus einem Pulverbehälter gesaugt und über eine Förderleitung zu einem Dosierorgan geleitet.

Statistisch und anlagebedingt auftretende Fluktuationen, sowie die Rückführung von Overspray können zu einer unkontrollierten Änderung des Fluidisationszustandes führen.

Dieses Problem kann durch die Entwicklung wirksamerer Verwirbelungsverfahren und Fluidisationseinrichtungen gelöst werden. Dabei bleibt aber der prinzipielle Nachteil, daß Fluktuationen, die zu einem ungleichmäßigen Lackauftrag führen, erst nach Aufbringung der Lackpartikel anhand des unbefriedigenden Lackierungsergebnisses erkannt werden können.

In EP 0 042 241 wird eine radioaktive Quelle im Inneren des Pulverbehälters angebracht und die Strahlungsintensität durch Detektoren an der Behälterwand gemessen. Von den Schwankungen der Strahlungsintensität wird dann auf die Änderungen des Fluidisierungszustands zurückgeschlossen. Damit ist allerdings nur eine grobe Bestimmung des Phasenzustands möglich. Überdies erschweren die Strahlenschutzvorschriften die unkomplizierte Anwendung des Verfahrens.

Ein anderes Verfahren zur Erkennung größerer Anomalitäten wird in EP 0 233 787 beschrieben. Dabei wird an einer Stelle innerhalb der Wirbelschicht ein Drucksignal gemessen und dieses mit Hilfe einer Fourier-Transformation in ein Frequenzspektrum zerlegt. Durch Vergleich eines störungsfreien Frequenzspektrums mit dem gemessen Frequenzspektrum lassen sich Störungen feststellen. Nachteilig ist dabei der erhebliche Justier- und Auswerteaufwand.

Aus der EP-A-0 093 801 ist ein Verfahren zur Regelung der Wirbelbetthöhe bekannt, bei welchem die Wirbelschicht über einen Meßwert geregelt wird, welcher von Drucksensoren abgeleitet wird. Dazu wird der Innenraum des Kessels in eine Anzahl von Zonen unterteilt und der Gasdifferenzdruck wird in vorgegebenen zeitlichen Abständen gemessen, wobei eine vorgegebene Anzahl der jeweils letzten Differenzdrücke für jede Zone gemittelt wird, um einen mittleren Differenzdruck zu berechnen. Der mittlere Differenzdruck wird durch die vertikale Länge des entsprechenden Bereichs geteilt, um die Dichte der Wirbelschicht für jede Zone zu bestimmen. Um eine mittlere Dichte der Wirbelschicht für jeden Bereich zu erhalten, wird eine vorgegebene Anzahl der neuesten Wirbelschichtdichten gemittelt. Um Fehlmessungen auszuschließen werden alle nichtpositiven Wirbelschichten von der weiteren Betrachtung ausgenommen. Mit weiteren Berechnungen wird dann die Höhe der Wirbelschicht bestimmt.

Aus der DE-A-39 25 476 ist schließlich ein Verfahren zum elektrostatischen Beschichten der inneren Oberfläche eines Lichtquellenkolbens mit einem pulverigen, anorganischen Beschichtungsstoff bekannt, bei welchem der pulverige Beschichtungsstoff aus einem Fluidbett durch Verwendung des venturischen Prinzips angesaugt wird. Die Konzentration in dem Pulverrauch wird mit Hilfe des Verhältnisses der Drücke, des die Saugwirkung sicherstellenden strömenden Mediums und eines anderen strömenden Steuermediums eingestellt. Die Abscheidung des Pulvers aus dem Pulverrauch erfolgt durch elektrostatische Effekte. Die Fluidisierung wird mittels eines Rotors sichergestellt, wobei das das Pulver transporierende Medium nach Befüllen abgezogen wird. Mit Hilfe der durch die Strömung eines im düsenartigen Einblaseinsatz strömenden Düsenmediums wird im Pulverspeicher eine Saugwirkung erzeugt, welche den Beschichtungsstoff aus dem Fluidbett und durch ein Saugrohr heraushebt und in einen Mischraum des Pulverspeichers leitet. Nachteilig ist hier, daß über die Homogenität des aus dem Fluidbett entnommenen Pulverrauchs keine Angaben gemacht werden können.

Aufgabe der Erfindung ist es, ein Verfahren zur Erzeugung eines homogenen Partikelstroms bereitzustellen, bei dem der Wirbelzustand der Teilchen auf einfache Weise bestimmt und gesteuert wird. Weiterhin soll eine Vorrichtung zur Durchführung des Verfahrens bereitgestellt werden.

Diese Aufgabe wird erfindungsgemäß durch die in den Ansprüchen definierten Verfahren und Vorrichtungen gelöst.

Bei dem in den Ansprüchen definierten Verfahren werden Partikel durch einen Strom eines Wirbelgases zu einer Wirbelschicht verwirbelt und dabei Druckmessungen in oder entlang der Wirbelschicht vorgenommen. Anschließend wird ein Maß für die Verteilung der Meßwerte dieser Druckmessungen ermittelt und aufgrund dieses Maßes die Geschwindigkeit des Wirbelgasstromes geregelt, wobei ein Ansaugen der Partikel aus der Wirbelschicht als homogener Partikelstrom erfolgt. Das Maß für die Verteilung der Meßwerte ist deren Standardabweichung. Bevorzugt sind die verwirbelten Partikel Pulverlackpartikel.

Ein bevorzugtes Verfahren besteht darin, daß zur Druckmessung Meßsensoren verwendet werden, die entlang der Wirbelschicht in Druckleitungen untergebracht sind, die mit einem Gasvolumenstrom gespült werden. Auf diese Weise wird Verklebungen und Verstopfungen der Druckleitungen vorgebeugt, die die Ergebnisse der Druckmessungen beeinträchtigen würden. Vorzugsweise wird ein Differenzdruck zwischen mehreren Punkten der Wirbelschicht oder zwischen einem Punkt der Wirbelschicht und einem äußeren Referenzdruck gemessen. Ein solcher äußerer Referenzdruck kann besonders dann verwendet werden, wenn die Meßsensoren in gasgespülten Druckleitungen angebracht sind. Damit wird es möglich, Meßgeräte zu verwenden, die sehr empfindlich auf relativ kleine Druckänderungen ansprechen und die von dem hohen Druck der Wirbelschicht somit entlastet werden. Dabei ist besonders bevorzugt eine Ausführungsform, bei der der äußere Referenzdruck einem sich ändernden mittleren Druck in der Wirbelschicht angepaßt wird. Solche Druckänderungen können durch Druckschwankungen im Pumpensystem auftreten, und können bei einer Referenzdruckmessung dazu führen, daß die Meßsensibilität zurückgenommen werden muß.

Die erfindungsgemäße Vorrichtung zur Durchführung des Verfahrens nach einem der Verfahrensansprüche besteht aus einem Behälter für eine Wirbelschicht und mindestens einem Meßsensor zur Druckmessung in oder entlang dieser Wirbelschicht. Weiterhin ist eine Recheneinheit zur Ermittlung eines Maßes für die Verteilung, nämlich für die Standardabweichung der Meßwerte der Druckmessungen vorgesehen. Eine Steuerungseinheit übernimmt dann die Steuerung der Geschwindigkeit des Wirbelgasstromes aufgrund des von der Recheneinheit ermittelten Maßes.

Die Vorrichtung umfaßt weiterhin ein mit einer Mischkammer verbundenes Ansaugrohr und einen Gasstrom, der mit der Mischkammer und dem Ansaugrohr zusammenwirkt und das Ansaugen und Mischen des Partikelstroms bewirkt.

Vorzugsweise sind die Meßsensoren entlang der Wirbelschicht in Druckleitungen untergebracht, die mit einem Gasvolumenstrom gespült werden. Weiter bevorzugt sind Meßsensoren, die entlang der Wirbelschicht derart angebracht sind, daß sie Differenzdruckmessungen zwischen mehreren Punkten der Wirbelschicht oder zwischen einem Punkt der Wirbelschicht und einem äußeren Referenzdruck erlauben. In einer bevorzugten Ausführungsform ist eine Regelungseinheit vorgesehen, die den äußeren Referenzdruck an einen sich ändernden mittleren Druck der Wirbelschicht anpaßt.

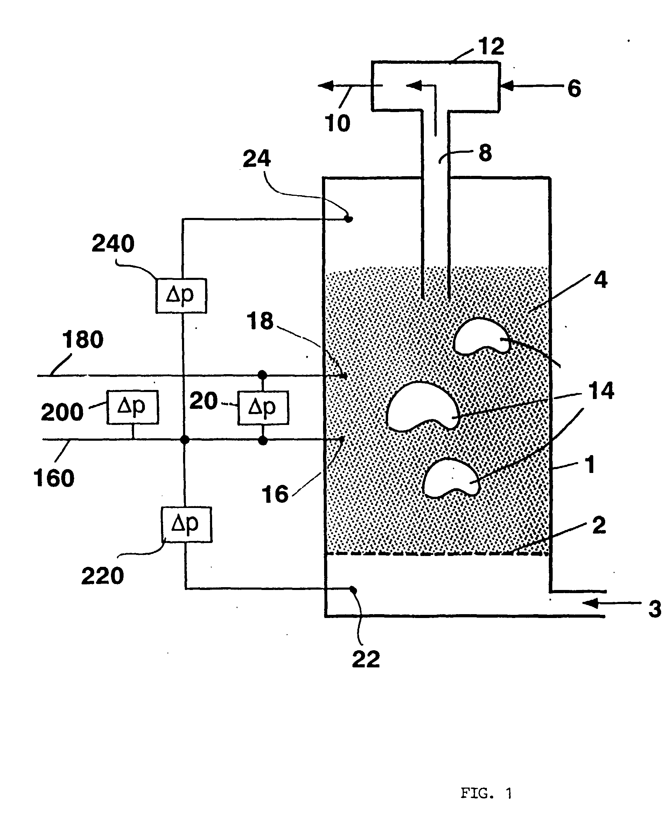

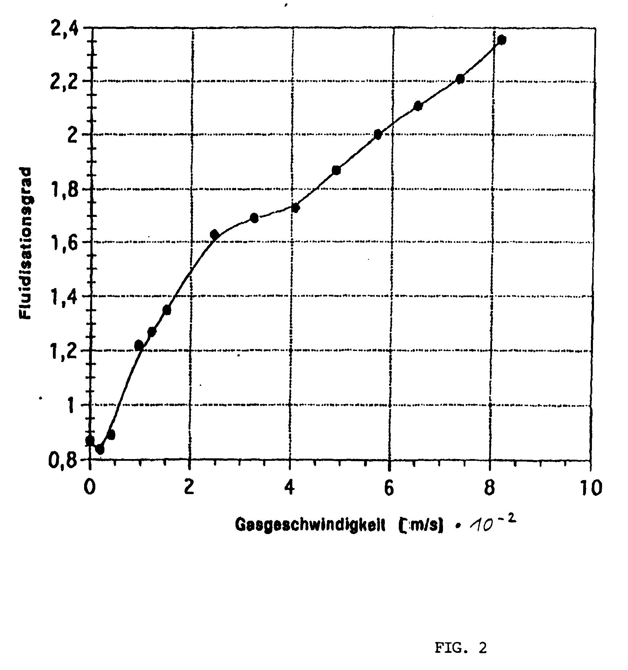

Die Erfindung wird nun anhand der Figuren 1 und 2 im einzelnen beschrieben. Dabei zeigt:
- Fig. 1:: eine schematische Ausführungsform der Erfindung.
- Fig. 2:: Abhängigkeit des Fluidisationsgrades der Partikel von der Geschwindigkeit des Gasvolumenstromes.

In Fig. 1 befindet sich in einem Behälter 1 auf einer perforierten Verteilerplatte 2 partikelförmiges Lackmaterial. Mit Hilfe eines Gasstroms 3 wird das partikelförmige Lackmaterial in eine Gas-Feststoff-Suspensionsphase 4 bzw. ein fluidisiertes Partikelbett 4 überführt.

Die Gas-Feststoffpartikel-Suspensionsphase 4 wird mit Hilfe eines Gasstromes 6 über ein Ansaugrohr 8 angesaugt, mit dem Gasstrom 6 vermischt und als ein Pulverlackstrom 10 aus der Ansaug- und Mischkammer 12 z.B. an eine Farbspritzpistole abgegeben. Dieser Pulverlackstrom 10 sollte möglichst eine konstante, homogene Zusammensetzung haben, um einen homogenen Lack-Sprühstrahl darzustellen.

Bei der ursprünglichen Verwirbelung der Lackteilchen in der Kammer 1 können in der Praxis Inhomogenitäten 14 auftreten, die Agglomerate oder Gasblasen sein können. Solche Inhomogenitäten 14 können in der Mischkammer 12 dazu führen, daß der Pulverlackstrom 10 ungleichförmig und ungleichmäßig wird.

Die Vorrichtung ist mit druckempfindlichen Meßsensoren versehen, die solche Inhomogenitäten 14 feststellen können. Bei der in Fig. 1 dargestellten Ausführungsform sind etwa im Mittelbereich der Fluidisationskammer 1 zwei Drucksensoren 16 und 18 vorgesehen. Die beiden Sensoren geben dem dort herrschenden Druck entsprechende Signale an einen Komparator 20 ab, der insbesondere ein Differenzdrucksignal erzeugen, speichern bzw. anzeigen kann. Bei geeignetem Sensorabstand und geeigneter Größe und Verteilung der Inhomogenitäten kann damit auch die Wanderungsbewegung der Inhomogenitäten erfaßt und beobachtet werden.

Aus den Meßwerten der vorgenommenen Druckmessungen wird erfindungsgemäß ein Maß für die Verteilung dieser Meßwerte, nämlich die Standardabweichung, ermittelt. Aufgrund dieses Maßes wird dann die Geschwindigkeit des Wirbelgasstromes geregelt.

Fig. 2 erläutert den Zusammenhang zwischen der Wirbelgasgeschwindigkeit und dem Zustand der Wirbelschicht. Dabei ist der Fluidisationsgrad in der Suspensionsphase 4 in Abhängigkeit von der Geschwindigkeit des Gasstroms 3 für ein Pulver mit bestimmter Teilchengröße aufgetragen. Als Fluidisationsgrad wird die Standardabweichung der Druckschwankungen bezeichnet. Es wird erkennbar, daß der Fluidisationsgrad der Partikel, d. h. die Homogenität der Suspensionsphase, durch eine Steigerung der Gasgeschwindigkeit in dem Volumenstrom 3 erhöht wird.

Die vorliegende Erfindung erlaubt somit auch bei unbekannter Teilchengröße, d.h. unbekanntem Zusammenhang zwischen Fluidisationsgrad und Gasgeschwindigkeit, die Einstellung und Beibehaltung eines bestimmten Fluidisationszustands, indem das Maß für die Druckschwankungen, nämlich deren Standardabweichung, zur Regelung der Geschwindigkeit des Gasvolumenstromes 3 verwendet wird.

Bei der bevorzugten Ausführungsform der Erfindung werden die Drucksensoren 16 und 18 mit Hilfe eines über Leitungen 160 bzw. 180 zugeführten Spülgases umspült. Damit wird verhindert, daß die Drucksensoren durch einen Aufbau von Partikeln, z.B. von Lackpartikeln, derart kontaminiert werden, daß verfälschte Werte gemessen werden. In den Spülgasleitungen 160,180 kann außerdem ein Referenzdruck aufgebaut werden, so daß etwa mit Komparator bzw. Druckmeßgerät 200 die Differenz zwischen dem am Meßpunkt 16 herrschenden Druck und dem Referenzdruck in der Leitung 160 ermittelt wird.

Weiterhin weist die in Fig. 1 dargestellte Vorrichtung Drucksensoren 22 bzw. 24 im Bereich des Zufuhrgases bzw. im Bereich oberhalb der Suspensionsphase 4 auf. Die von diesen Drucksensoren 22 bzw. 24 abgegebenen Drucksignale werden Komparatoren 220 bzw. 240 zugeführt. Diesen beiden Komparatoren 220 bzw. 240 wird auch das vom Drucksensor 16 abgegebene Meßsignal zugeführt. Die Komparatoren 220 bzw. 240 erzeugen, speichern und zeigen ggf. ein Signal an, das der Differenz zwischen den Drücken an den Meßstellen 16 und 22 bzw. 16 und 24 entspricht.

An den Meßpunkten 16, 18, 22 und 24 können statt Sensoren auch einfache Druckleitungen vorgesehen sein, die den Druck an den Meßpunkten zu den Komparatoren bzw. Druckmeßgeräten 20, 200, 220 oder 240 leiten und in denen ein Referenzdruck aufgebaut werden kann. Die registrierten Druckschwankungen sind ein Maß für die zeitliche Konstanz und damit Homogenität des Pulverlackstroms. Liegt das Maß für die Verteilung der Druckschwankungen außerhalb des vorgegebenen Bereiches, so kann einerseits der Gasstrom 10, der zum Beispiel zu einer Farbspritzpistole führt, unterbrochen werden. Andererseits kann aufgrund des Maßes die Gasgeschwindigkeit in dem Volumenstrom 3 erhöht werden. Auch andere Maßnahmen wie die Aktivierung einer Vorverwirbelung können getroffen werden.

## Patentansprüche

1. Partikelverwirbelungsverfahren zur Erzeugung eines homogenen Partikelstroms durch
- Verwirbelung von Partikeln durch einen Strom eines Wirbelgases (3) zu einer Wirbelschicht (4) und Ansaugen der Partikel aus der Wirbelschicht (4), gekennzeichnet durch folgende Schritte:
- Vornahme von Druckmessungen in oder entlang der Wirbelschicht (4)
- Ermittlung eines Maßes für die Verteilung der Meßwerte dieser Druckmessungen, wobei das Maß die Standardabweichung der Meßwerte ist und
- Regelung der Geschwindigkeit des Wirbelgasstromes (3) aufgrund dieses Maßes.

2. Verfahren nach Anspruch 1, dadurch gekennzeichnet, daß die verwirbelten Partikel Pulverlackpartikel sind.

3. Verfahren nach Anspruch 1 oder 2, dadurch gekennzeichnet, daß zur Druckmessung Meßsensoren (16, 18) verwendet werden, die entlang der Wirbelschicht (4) in Druckleitungen untergebracht sind, welche mit einem Gasvolumenstrom gespült werden.

4. Verfahren nach einem der Ansprüche 1 bis 3, dadurch gekennzeichnet, daß der Differenzdruck zwischen mehreren Punkten der Wirbelschicht (4) oder zwischen einem Punkt der Wirbelschicht (4) und einem äußeren Referenzdruck oberhalb und/oder unterhalb der Wirbelschicht (4) gemessen wird.

5. Verfahren nach Anspruch 4, dadurch gekennzeichnet, daß der äußere Referenzdruck einem sich ändernden mittleren Druck in der Wirbelschicht (4) angepaßt wird.

6. Verfahren nach einem der Ansprüche 1 bis 5, dadurch gekennzeichnet, daß das Ansaugen der Partikel aus der Wirbelschicht (4) mittels eines Gasstroms (6) über ein Ansaugrohr (8) vorgenommen wird, daß eine Vermischung des Partikelstroms mit dem Gasstrom (6) in einer Ansaug- und Mischkammer (12) erfolgt und daß der Austritt aus dieser Ansaug- und Mischkammer (12) als homogener Partikelstrom erfolgt.

7. Verfahren nach einem der Ansprüche 1 bis 6, dadurch gekennzeichnet, daß der Partikelstrom unterbrochen wird, wenn das Maß für die Verteilung der Meßwerte der Druckmessungen außerhalb eines vorgegebenen Bereichs liegt.

8. Verfahren nach einem der Ansprüche 1 bis 7, dadurch gekennzeichnet, daß die Gasgeschwindigkeit des Wirbelgasstroms (3) erhöht wird oder eine Vorverwirbelung erfolgt, wenn das Maß für die Verteilung der Meßwerte der Druckmessungen außerhalb eines vorgegebenen Bereiches liegt.

9. Verfahren nach einem der Ansprüche 1 bis 8, dadurch gekennzeichnet, daß zunächst der Partikelstrom unterbrochen wird, wenn das Maß für die Verteilung der Meßwerte der Druckmessungen außerhalb eines bestimmten Bereiches liegt und daß zweitens die Strömungsgeschwindigkeit des Wirbelstromgases (3) erhöht wird oder eine Vorverwirbelung stattfindet entsprechend des Maßes für die Verteilung der Meßwerte der Druckmessungen.

10. Vorrichtung zur Durchführung des Verfahrens nach einem der Verfahrensansprüche, mit einem Behälter (1) für eine Wirbelschicht (4), aufweisend ein mit einer Mischkammer (12) verbundenes Ansaugrohr (8) und einen Gasstrom (6), der mit der Mischkammer (12) und dem Ansaugrohr (8) zusammenwirkt und das Ansaugen und Mischen des Partikelstroms (10) bewirkt, gekennzeichnet durch
mindesens einen Meßsensor (16,18) zur Druckmessung in oder entlang der Wirbelschicht (4),
eine Recheneinheit zur Ermittlung der Standardabweichung der Meßwerte der Druckmessungen,
eine Regelungseinheit für die Regelung der Geschwindigkeit des Wirbelgasstromes (3) aufgrund des von der Recheneinheit ermittelten Maßes.

11. Vorrichtung nach Anspruch 10, gekennzeichnet durch Meßsensoren (16,18) die entlang der Wirbelschicht (4) in Druckleitungen untergebracht sind, welche mit einem Gasvolumenstrom gespült werden.

12. Vorrichtung nach einem der Ansprüche 10 oder 11, gekennzeichnet durch Meßsensoren (16, 18; 22, 24), die entlang der Wirbelschicht (4) zur Ausführung einer Differenzdruckmessung zwischen mehreren Punkten (16,18) der Wirbelschicht (4) oder zwischen einem Punkt (16,18) der Wirbelschicht (4) und einem äußeren Referenzdruck (22,24) oberhalb und/oder unterhalb der Wirbelschicht (4) angeordnet sind.

13. Vorrichtung nach Anspruch 12, gekennzeichnet durch eine Regelungseinheit zur Anpassung des äußeren Referenzdruckes (22, 24) an einen sich ändernden mittleren Druck in der Wirbelschicht (4).

## Claims

1. A particle fluidization method for producing a homogeneous particle stream by swirling up particles by a stream of a fluidizing gas (3) to form a fluidized bed (4) and sucking the particles out of the fluidized bed (4), which comprises the following steps:
- performing pressure measurements in or along the fluidized bed (4),
- determining a parameter for the distribution of the measured values from these pressure measurements, the parameter being the standard deviation of the measured values, and
- regulating the flow rate of the stream of fluidizing gas (3) on the basis of this parameter.

2. A method as claimed in claim 1, wherein the fluidised particles are powder coating particles.

3. A method as claimed in claim 1 or 2, wherein the pressure measurement is carried out using measuring sensors (16, 18) which are installed along the fluidized bed (4) in pressure lines which are flushed with a volume flow of gas.

4. A method as claimed in any one of claims 1 to 3, wherein the differential pressure is measured between two or more points in the fluidized bed (4) or between one point in the fluidized bed (4) and an external reference pressure above and/or below the fluidized bed (4).

5. A method as claimed in claim 4, wherein the external reference pressure is matched to a changing mean pressure in the fluidized bed (4).

6. A method as claimed in any one of claims 1 to 5, wherein the sucking of the particles out of the fluidized bed (4) is performed by means of a gas stream (6) via a suction pipe (8), wherein mixing of the particle stream with the gas stream (6) takes place in a suction and mixing chamber (12), and wherein the discharge from this suction and mixing chamber (12) is in the form of a homogeneous particle stream.

7. A method as claimed in any one of claims 1 to 6, wherein the particle stream is interrupted if the parameter for the distribution of the measured values of the pressure measurements lies outside a predetermined range.

8. A method as claimed in any one of claims 1 to 7, wherein the gas rate of the fluidizing gas stream (3) is increased or prefluidization is effected if the parameter for the distribution of the measured values of the pressure measurements lies outside a predetermined range.

9. A method as claimed in any one of claims 1 to 8, wherein first the particle stream is interrupted if the parameter for the distribution of the measured values of the pressure measurements lies outside a defined range and wherein secondly the flow rate of the fluidizing stream gas (3) is increased or prefluidization takes place in accordance with the parameter for the distribution of the measured values of the pressure measurements.

10. An apparatus for implementing the method as claimed in any one of the method claims, having a container (1) for a fluidized bed (4), having a suction pipe (8) connected to a mixing chamber (12) and a gas stream (6), which container interacts with the mixing chamber (12) and the suction pipe (8) and effects the sucking out and mixing of the particle stream (10), which comprises
at least one measuring sensor (16, 18) for measuring the pressure in or along the fluidized bed (4),
a computing unit for determining the standard deviation of the measured values from the pressure measurements, and
a regulating unit for regulating the flow rate of the stream of fluidizing gas (3) on the basis of the parameter determined by the computing unit.

11. An apparatus as claimed in claim 10, which has measuring sensors (16, 18) installed along the fluidized bed (4) in pressure lines which are flushed with a volume flow of gas.

12. An apparatus as claimed in either of claims 10 or 11, which has measuring sensors (16, 18; 22, 24) which are arranged along the fluidized bed (4) for performing a measurement of the differential pressure between two or more points (16, 18) in the fluidized bed (4) or between one point (16, 18) in the fluidized bed (4) and an external reference pressure (22, 24) above and/or below the fluidized bed (4).

13. An apparatus as claimed in claim 12, which has a regulating unit for matching the external reference pressure (22, 24) to a changing mean pressure in the fluidized bed (4).

## Revendications

1. Procédé de fluidisation de particules pour l'obtention d'un courant homogène de particules par aspiration des particules de la couche fluidisée (4), caractérisé par les étapes suivantes:
- Fluidisation de particules en une couche fluidisée (4) par un courant d'un gaz de fluidisation (3)
- Relevé de mesures de pression dans ou le long de la couche fluidisée (4),
- Calcul d'une mesure de la distribution des valeurs de mesure de ces mesures de pression, la mesure étant l'écart-type des valeurs de mesure, et
- Régulation de la vitesse du gaz de fluidisation (3) sur base de cette mesure.

2. Procédé selon la revendication 1, caractérisé en ce que les particules fluidisées sont des particules de peinture en poudre.

3. Procédé selon la revendication 1 ou 2, caractérisé en ce que l'on utilise pour la mesure de pression des sondes de mesure (16, 18), installées sur des lignes de pression le long de la couche fluidisée (4), et rincées par un débit volumique de gaz.

4. Procédé selon l'une des revendications 1 à 3, caractérisé en ce que la pression différentielle est mesurée entre plusieurs points de la couche fluidisée (4) ou entre un point de la couche fluidisée (4) et une pression de référence extérieure au-dessus et/ou au-dessous de la couche fluidisée (4).

5. Procédé selon la revendication 4, caractérisé en ce que la pression de référence extérieure est adaptée à une pression moyenne variable dans le couche fluidisée (4).

6. Procédé selon l'une des revendications 1 à 5, caractérisé en ce que l'aspiration des particules de la couche fluidisée (4) est réalisée au moyen d'un courant de gaz (6) via un tube d'aspiration (8), qu'il se produit un mélange du courant de particules et du courant de gaz (6) dans une chambre d'aspiration et de mélange (12) et que la sortie de cette chambre d'aspiration et de mélange (12) se fait sous forme de courant homogène de particules.

7. Procédé selon l'une des revendications 1 à 6, caractérisé en ce que le courant de particules est interrompu lorsque la mesure de la distribution des valeurs de mesure des mesures de pression sort d'une plage prescrite.

8. Procédé selon l'une des revendications 1 à 7, caractérisé en ce que la vitesse du gaz du courant de gaz de fluidisation (3) est augmentée, ou qu'il se produit un prémélange, lorsque la mesure de la distribution des valeurs de mesure des mesures de pression sort d'une plage prescrite.

9. Procédé selon l'une des revendications 1 à 8, caractérisé en ce que d'abord, le courant de particules est interrompu lorsque la mesure de la distribution des valeurs de mesure des mesures de pression sort d'une plage prescrite et qu'ensuite, la vitesse d'écoulement du gaz de fluidisation (3) est augmentée ou qu'un prémélange est opéré en fonction de la mesure de la distribution des valeurs de mesure des mesures de pression.

10. Dispositif pour l'exécution du procédé selon l'une des revendications de procédé, comportant un réservoir (1) pour une couche fluidisée (4), présentant un tube d'aspiration (8) relié à une chambre de mélange (12), et un courant de gaz (6) qui interagit avec la chambre de mélange (12) et le tube d'aspiration (8) et opère l'aspiration et le mélange du courant de particules (10), caractérisé par
au moins une sonde de mesure (16, 18) pour la mesure de pression de la couche fluidisée (4),
un module de calcul pour la détermination de l'écart-type des valeurs de mesure des mesures de pression,
une unité de régulation pour la régulation de la vitesse du courant de gaz de fluidisation (3) sur base de la mesure calculée par le module de calcul.

11. Dispositif selon la revendication 10, caractérisé en ce que des sondes de mesure (16, 18) sont installées dans des lignes de pression placées le long de la couche fluidisée (4) et rincées par un débit volumique de gaz.

12. Procédé selon l'une des revendications 10 ou 11, caractérisé par des sondes de mesure (16, 18; 22, 24), installées le long de la couche fluidisée (4) afin d'opérer une mesure de pression différentielle entre plusieurs points (16, 18) de la couche fluidisée (4) ou entre un point (16, 18) de la couche fluidisée (4) et une pression de référence extérieure (22, 24) au-dessus et/ou au-dessous de la couche fluidisée (4).

13. Procédé selon la revendication 12, caractérisé par une unité de régulation destinée à l'adaptation de la pression de référence extérieure (22, 24) à une pression moyenne variable dans la couche fluidisée (4).
